# EUROPÄISCHE PATENTSCHRIFT

(11) **EP 0 265 809 B1**
(45) Veröffentlichungstag und Bekanntmachung des Hinweises auf die Patenterteilung: **17.03.1993**
(21) Anmeldenummer: 87115249.2
(22) Anmeldetag: 19.10.1987
(51) Int. Cl.: G11B 17/22

(54) **CD-Plattenwechsler**
CD-changer
Changeur de disques CD

(30) Priorität: 29.10.1986 DE 3636784
(43) Veröffentlichungstag der Anmeldung: 04.05.1988
(73) Patentinhaber: Deutsche Thomson-Brandt GmbH, 78003 Villingen-Schwenningen (DE)
(72) Erfinder: Geiger, Erich, D-7731 Unterkirnach (DE)

(56) Entgegenhaltungen:
- EP-A- 0 066 317
- BE-A- 903 223
- DE-A- 3 421 912
- GB-A- 2 102 184
- US-A- 4 608 679
- PATENT ABSTRACTS OF JAPAN, Band 8, Nr. 269 (P-319)(1706), 8. Dezember 1984; JP-A-59 135 661

## Beschreibung

Die Erfindung betrifft einen CD-Plattenwechsler gemäß dem Oberbegriff des Anspruchs 1.

Ein CD-Wechsler, mit dem wahlweise verschiedene CD-Platten abgespielt werden können, enthält vorzugsweise ein Abspielteil mit dem Antrieb, dem Abtaster und den Signalverarbeitungsschaltungen sowie ein Magazin, in dem stapelartig eine Vielzahl von CD-Platten angeordnet ist. Zwischen dem Abspielteil und dem Magazin sind Mittel vorgesehen, mit denen je nach Bedarf eine der in dem Magazin enthaltenen CD-Platten aus dem Magazin herausgenommen und in die Abspiellage innerhalb des Abspielteils gebracht werden kann. Zur Auswahl verschiedener CD-Platten ist dabei eine Relativbewegung zwischen dem Abspielteil und dem Magazin erforderlich. Durch diese Bewegung wird das Abspielteil gegenüber dem Magazin in die Lage gebracht, in der eine gewünschte CD-Platte aus dem Magazin heraus genommen werden kann. Dabei ist es notwendig, die Relativlage zwischen dem Abspielteil und dem Magazin genau zu ermitteln und zu steuern.

In der US-PS 4 608 679 ist ein Wechselspieler für Kassetten beschrieben, der mit einer Vorrichtung zur Entnahme einer Kassette ausgerüstet ist.

Die Vorrichtung zur Entnahme einer Kassette ist mit einem Infrarotsender und einem Infrarotempfänger ausgestattet. Unter jeder Reihe von Fächern eines Magazins ist eine Leiste mit kreisförmigen reflektierenden Flächen vorgesehen, wobei jedem Fach eine kreisförmige reflektierende Fläche zugeordnet ist. Die Vorrichtung zur Entnahme einer Kassette ist dann richtig zur Entnahme der Kassette positioniert, wenn das vom Infrarotsender ausgestrahlte Licht von der kreisförmigen Fläche auf den Infrarotempfänger reflektiert wird. Jedoch kann mittels des Infrarotsenders, der kreisförmigen reflektierenden Fläche und des Infrarotempfängers nicht festgestellt werden, ob eine Kassette in einem Fach liegt oder nicht. Um dies feststellen zu können, ist eine zweite opto-elektrische Vorrichtung mit einem Infrarotsender und einem Infrarotempfänger für jedes Fach vorgesehen. Um ferner feststellen zu können, ob eine Kassette richtig orientiert im Fach liegt, ist eine dritte opto-elektrische Vorrichtung mit einem Orientierungssender und einem Orientierungsempfänger für jedes Fach vorgesehen. Dieser Wechselspieler ist verhältnismäßig aufwendig gebaut, weil für die Vorrichtung zur Entnahme der Kassetten drei verschiedene opto-elektrische Vorrichtungen vorgesehen sind.

Aus der DE-OS 34 21 912 ist ein Plattenwechsler bekannt, bei dem eine Abspieleinheit relativ zum Magazin genau positioniert wird. Die genaue Positionierung wird durch eine lichtreflektierende Platte mit Reflexionsmustern und mittels Photosensoren erzielt. Ferner sind auf der lichtreflektierenden Platte Adressen für die einzelnen Platten in Form weiterer Reflexionsmuster vorgesehen. Die lichtreflektierende Platte ist aber an der Rückseite des Magazins befestigt; die Photosensoren sind an einem Gehäuse hinter der lichtreflektierenden Platte angeordnet. Das Magazin ist bewegbar, während die Abspieleinheit und die Photosensoren fest angeordnet sind.

In der BE-A 903 223 ist ein Plattenspieler mit Magazin offenbart, bei dem das Abspielteil und das Magazin relativ zueinander positioniert werden. Hierfür ist eine optische Lesevorrichtung vorgesehen, die Daten zur richtigen Positionierung von den einzelnen Fächern liest, die dann anschließend in einem Mikroprozessor ausgewertet werden.

Der Erfindung liegt nun die Aufgabe zugrunde, für einen CD-Wechsler gemäß Oberbegriff des Anspruchs 1 eine Positionierung des Abspielteils relativ zum Magazin zu schaffen, die besonders einfach ist und insbesondere im Wesentlichen ohne mechanisch bewegte Teile auskommt.

Diese Aufgabe wird durch die im Anspruchs 1 beschriebene Erfindung gelöst. Vorteilhafte Weiterbildungen der Erfindung sind in den Unteransprüchen beschrieben.

Durch die Verwendung einer optisch wirkenden Verkopplung zwischen den beiden Teilen ergibt sich eine besonders einfache, betriebssichere und berührungslos arbeitende Ermittlung und Steuerung der Relativlage zwischen Abspielteil und Magazin. Dabei sind mechanisch bewegte Teile nicht erforderlich. Das ist besonders vorteilhaft für einen CD-Wechsler für ein Auto, weil die Funktion mechanisch bewegter Teile von den am Auto wirksamen Beschleunigungskräften abhängig sein kann. Bei der Erfindung kann die reflektierende Eigenschaft der CD-Platte in vorteilhafter Weise ausgenutzt werden, um die Lage des Abspielteils zum Magazin zu ermitteln. Gesonderte reflektierende Marken an dem Magazin sind dabei nicht erforderlich. Ein weiterer Vorteil besteht darin, daß der Lichtstrahl an einem Fach des Magazins, in dem keine CD-Platte liegt, ebenfalls nicht reflektiert wird. Das Abspielteil wird also an dieser Stelle in vorteilhafter Weise nicht zur Entnahme einer CD-Platte aus dem Magazin gestoppt.

Die Erfindung wird im folgenden an Hand der Zeichnung erläutert. Darin zeigen:
- Fig. 1: im Prinzip die Wirkungsweise zwischen Abspielteil und Magazin,
- Fig. 2: eine spezielle Ausbildung einer Lichtquelle und eines Fotoelementes und
- Fig. 3: das Magazin mit zwei Weiterbildungen der Erfindung.

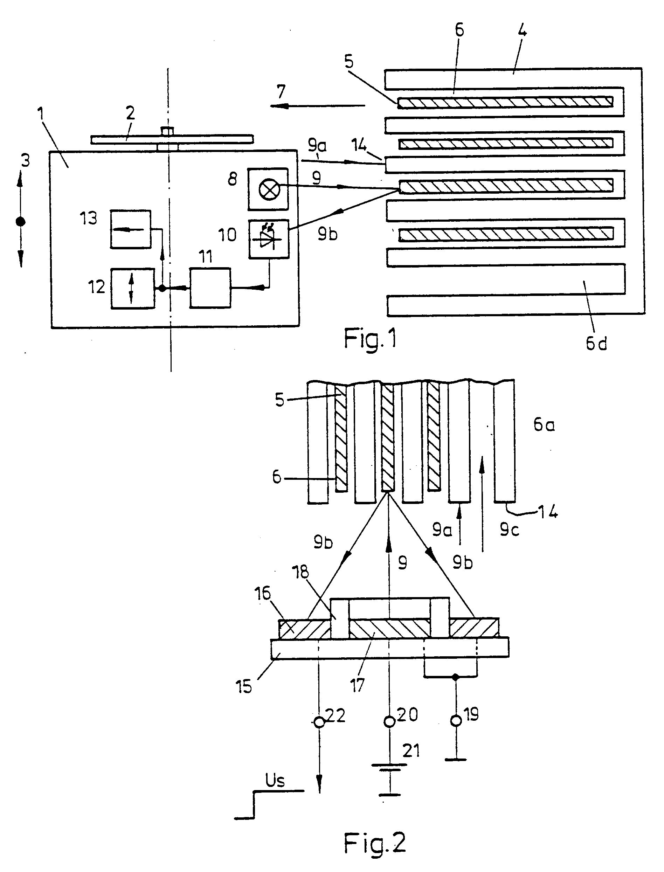

In Fig. 1 ist das Abspielteil 1 mit dem Plattenteller 2 in den Richtungen 3 relativ zu dem feststehenden Magazin 4 verschiebbar angeordnet, um wahlweise verschiedene CD-Platten 5 aus den einzelnen Fächern 6 entnehmen zu können. Es wird jeweils eine CD-Platte 5 dem Magazin 4 durch nicht näher dargestellte Mittel entnommen und in Richtung 7 dem Plattenteller 2 zugeführt.

Das Abspielteil 1 enthält eine Lichtquelle 8, die den Lichtstrahl 9 in Richtung auf die linke Wand des Magazins 4 wirft. Im Abspielteil 1 sind weiterhin vorgesehen ein Fotoelement 10, eine Steuerschaltung 11, ein Antrieb 12 und eine Steuerstufe 13 für die Entnahme einer Platte 5 in Richtung 7.

Wenn das Abspielteil 1 in Richtung 3 bewegt wird, um eine bestimmte Platte 5 dem Magazin 4 zu entnehmen, trift der Lichtstrahl beispielsweise zunächst auf die dunkel ausgebildete Vorderwand 14 des Magazins 4, wie durch den Lichtstrahl 9a dargestellt. An der schwarz ausgebildeten Vorderwand 14 wird der Lichtstrahl 9a nicht reflektiert. Auf das Fotoelement 10 gelangt dadurch kein Licht. Dadurch wird die Steuerschaltung 11 so gesteuert, daß der Antrieb 12 fur die Bewegung des Abspielteils 1 in Richtung 3 eingeschaltet bleibt und die Steuerstufe 13 für die Entnahme einer Platte 5 in Richtung 7 nicht eingeschaltet wird. Für die Auswahl einer bestimmten CD-Platte 5 kann sich das Abspielteil 1 oder auch das Magazin 4 in Richtung 3 bewegen.

Wenn das Abspielteil 1 relativ zum Magazin eine zur Entnahme einer Platte 5 geeignete relative Lage erreicht hat, trifft der Lichtstrahl 9 auf die reflektierende äußere Kante einer CD-Platte 5. Dadurch entsteht der reflektierte Lichtstrahl 9b, der auf das Fotoelement 10 gelangt. Dadurch wird die Steuerschaltung 11 so angesteuert, daß der Antrieb 12 für die Bewegung in Richtung 3 abgeschaltet und die Steuerstufe 13 für die Entnahme einer Platte 5 eingeschaltet wird. Die Reflexion des Lichtstrahls 9 an einer Kante einer CD-Platte 5 wird also ausgenutzt als Kriterium dafür, daß das Abspielteil 1 relativ zum Magazin 4 eine zur Entnahme einer CD-Platte 5 geeignete Stellung eingenommen hat. Wenn der Lichtstrahl 9 auf die keine Platte 5 enthaltene Kammer 6d gerichtet ist, erfolgt ebenfalls keine Reflexion. Die Steuerstufe 13 zu Entnahme einer Platte 5 wird dann nicht ausgelöst.

Fig. 2 zeigt eine Einrichtung, die gleichzeitig die Lichtquelle 8 und das Fotoelement 10 bildet. Auf dem Halbleitersubstrat 15 ist eine ringförmige Fotozelle 16 als Halbleiterkörper aufgebracht. In der inneren Öffnung der Fotozelle 16 ist eine Leuchtdiode 17 in Form einer Gallium-Arsenid-Diode als Halbleiter auf das Substrat 15 aufgebracht. Zwischen der Fotozelle 16 und der Leuchtdiode 17 ist eine ringförmige Abschirmung 18 vorgesehen. Fotozelle 16 und Leuchtdiode 17 haben einen gemeinsamen Anschluß 19, der mit Erde verbunden ist. An den zweiten Anschluß 20 der Leuchtdiode 17 ist eine Batterie 21 angeschlossen, die die Diode 17 zum Leuchten bringt und den Lichtstrahl 9 erzeugt. Der reflektierte Lichtstrahl 9b trifft auf die ringförmige Fotozelle 16 und erzeugt an der Klemme 22 eine Spannung Us, die in der Steuerschaltung 11 gemäß Fig. 1 gewertet wird. Die ringförmige Abschirmung 18 verhindert, daß das von der Leuchtdiode 17 ausgehende Licht auf direktem Wege zu der Fotozelle 17 gelangt. Eine solche Anordnung ist näher beschrieben in der DE-PS 24 25 855.

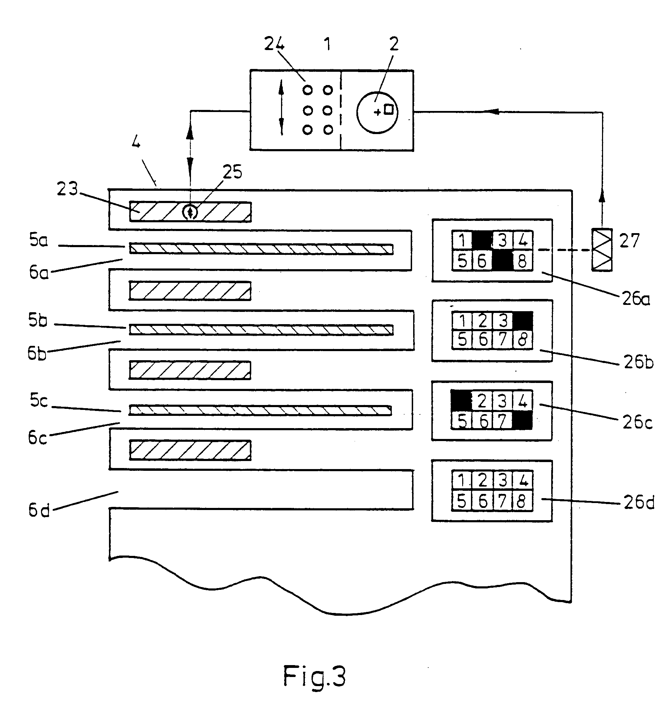

Fig. 3 zeigt ein Magazin 4 mit zwei zusätzlichen Merkmalen gemäß Weiterbildungen der Erfindung.

Jedem der Plattenfächer 6a bis 6d ist ein als einschreibbarer und lesbarer Speicher dienender Magnetstreifen 23 zugeorndet. Mit der Tastatur 24 des Abspielteils 1 und des Abtasters 25 ist die Adresse der in dem Fach 6a befindlichen Platte 5a in den Magnetstreifen 23 einschreibbar. In dem Magnetstreifen 23 ist dann die Adresse der in dem Fach 6a befindlichen Platte 5a enthalten. Entsprechend sind die übrigen Fächer 6b - d ausgebildet. Für das Abspielen einer gewünschten Platte 5 wird die Adresse dieser Platte über die Tastatur 24 in das Abspielteil 1 eingegeben. Bei der Bewegung des Abspielteils 1 relativ zu dem Magazin 4 gemäß Fig. 1 werden mit dem Abtaster 25 die Magnetstreifen 23 gelesen. Wenn Übereinstimmung zwischen der aus dem Magnetstreifen 23 gelesenen Adresse und der in die Tastatur 24 eingegebenen Adresse festgestellt wird, wird die Bewegung des Abspielteils 1 in Richtung 3 gemäß Fig. 1 gestoppt und die Platte 5 dem Fach 6 entnommen. Auf diese Weise kann also durch Bedienung der Tastatur 24, die z.B. in einem Auto von dem Abspielteil 1 und dem Magazin 4 entfernt angeordnet ist, eine jeweils gewünschte Platte 5 zur Wiedergabe dem Abspielteil 1 zugeführt werden. Anstelle des Magnetstreifens 23 können auch andere Speicher vorgesehen sein, die zur Eingabe einer Adresse einschreibbar, zur Erkennung der Adresse lesbar und zur Eingabe einer anderen Adresse löschbar sind, z.B. optische Speicher oder Festkörperspeicher. Derartige Speicher zur Eingabe und Erkennung von Adressen bei Kassetten sind z.B. beschrieben in der DE OS-29 43 409.

Außerdem ist in Fig. 3 jedem Plattenfach 6 ein Ziffernfeld 26 mit Ziffern 1 - 8 zugeordnet. Die Ziffern 1 - 8 stellen die einzelnen Stücke, z.B. kurz oder lange Musikstücke dar, die jeweils auf der Platte 5 gespeichert sind. In der Praxis wird die Zahl größer als 8 sein. Der Bedienende markiert z.B. mit einem schwarzen Stift die Ziffern der Stücke, die er von der jeweiligen Platte 5 hören möchte, wie durch die schwarz ausgefüllten Felder angedeutet. Wenn die Platte 5a für eine Wiedergabe dem Abspielteil 1 zugeführt wird, wird das Ziffernfeld mit dem optoelektronischen Abtaster 27 abgetastet und das Ergebnis dem Abspielteil 1 zugeführt. Durch entsprechende Steuerung des Abtastervorschubes des Abspielteils 1 wird bewirkt, daß bei der Wiedergabe nur die markierten Stücke 2 und 7 abgespielt werden und die dazwischen liegenden Stücke mittels des schnellen Suchlaufs mit einer sehr kurzen Pause in der Größenordnung von 1 - 2 Sekunden übersprungen werden. Entsprechend werden bei der Platte 5b nur das Stück Nr. 4 und bei der Platte 5c nur die Stücke Nr. 1 und 8 wiedergegeben. Bei dem Ziffernfeld 26d ist keine Ziffer markiert, weil sich in dem Fach 6d keine Platte 5 befindet.

Durch die Kombination der Adressierung mit den Magnetstreifen 23 und der Auswertung der markierten Ziffern der Ziffernfelder 26 ist es also möglich, beliebige ausgewählte Stücke von beliebigen ausgewählten Platten 5 in einer gewünschten Reihenfolge wiederzugeben. Vorzugsweise enthält das Abspielteil 1 einen Speicher für die Adressen der Platten 5, die nacheinander dem Abspielteil 1 zugeführt werden, um dann je Platte die in den Ziffernfeldern 26 markierten Stücke wiederzugeben.

Das Magazin 4 kann auch durch Zusammensetzen von einzelnen Behältern gebildet sein, die jeweils eine Platte enthalten. Beispielsweise ist jede CD-Platte in einem einseitig offenen Gehäuse gelagert, und die einzelnen Gehäuse oder Behälter der CD-Platten werden durch eine Snap-In-Verbindung oder eine sonstige formschlüssige Rastverbindung zu dem Magazin 4 zusammengesetzt.

## Patentansprüche

1. Informationsträgerwechsler mit einem Greifer (1) und einem die Informationsträger (5) enthaltenen Magazin (4), die zur Entnahme verschiedener Informationsträger (5) gegeneinander verschiebbar sind, wobei eine der Positionierung des Greifers (1) relativ zum Magazin (4) zwischen beiden Teilen dienende optische Einrichtung (8 - 10) vorgesehen ist, bei der an dem Greifer (1) eine einen Lichtstrahl (9) auf die offene Seite des Magazins (4), d.h. auf die dem Greifer zugewandten Wände und Kanten des Magazins und auf die Informationsträger, werfende Lichtquelle (8) und ein das von der offenen Seite des Magazins (4) reflektierte Licht ermittelndes Photoelement (10, 16) vorgesehen sind, wobei das Photoelement (10, 16) an eine Steuerschaltung (11) für die Positionierung des Greifers (1) relativ zum Magazin (4) und für die Entnahme eines Informationsträgers (5) aus dem Magazin (4) angeschlossen ist, **dadurch gekennzeichnet,** daß die dem Greifer (1) zugewandten Wände und Kanten (14) des Magazins (4) nichtlichtreflektierend ausgebildet sind, und die Informationsträger (5) CD-Platten sind, die den von der Lichtquelle (8) ausgehenden Lichtstrahl (9) auf das Photoelement (10, 16) reflektieren.

2. Informationsträgerwechsler nach Anspruch 1, **dadurch gekennzeichnet,** daß das Photoelement (16) die Lichtquelle (17) ringförmig umgibt.

3. Informationsträgerwechsler nach Anspruch 1, **dadurch gekennzeichnet,** daß die Lichtquelle als Leuchtdiode (17) und das Photoelement als Photozelle (16) je als Halbleiterkörper auf demselben Substrat (15) ausgebildet sind.

4. Informationsträgerwechsler nach Anspruch 1, **dadurch gekennzeichnet,** daß der Greifer (1) gegenüber dem feststehenden Magazin (4) zur Entnahme verschiedener Platten (5) verstellbar gelagert ist.

5. Informationsträgerwechsler nach Anspruch 1, **dadurch gekennzeichnet,** daß jeweils einem Informationstragerfach (6) des Magazins (4) ein Speicherelement (23) zugeordnet ist, bei dem Kennwerte eines Informationsträgers (5) einschreibbar und zur Steuerung zur Entnahme dieser Informationsträger (5) durch den Greifer (1) auslesbar sind.

6. Informationsträgerwechsler nach Anspruch 1, **dadurch gekennzeichnet,** daß jeweils einem Informationsträgerfach (6) ein manuell markierbares Ziffernfeld (26) für die auf dem Informationsträger (5) befindlichen Stücke zugeordnet ist und daß das Ziffernfeld (26) durch eine Leseeinrichtung (27) abtastbar ist, die der Greifer (1) auf die Wiedergabe der markierten Stücke steuert.

7. Informationsträgerwechsler nach Anspruch 1, **dadurch gekennzeichnet,** daß das Magazin (4) aus einzelnen, je einen Informationsträger (5) enthaltenden Behältern zusammengesetzt ist.

## Claims

1. Information carrier changer including a gripping device (1) and a magazine (4) containing the information carriers (5), which are relatively displaceable for the extraction of different information carriers (5), wherein an optical device (8 - 10) serving to position the gripping device (1) relative to the magazine (4) is provided between the two parts, in which a light source (8) projecting a light beam (9) onto the open side of the magazine (4) i.e. onto the walls and edges of the magazine facing the gripping device (1) and onto the information carriers, and a photoelement (10, 16) detecting light reflected from the open side of the magazine (4) are provided on the gripping device (1), wherein the photoelement (10, 16) is connected to a control circuit (11) for the positioning of the gripping device (1) relative to the magazine (4) and for the extraction of an information carrier (5), characterised in that, the walls and edges of the magazine (4) facing the gripping devise (1) are made non-light reflecting and the information carriers (5) are compact discs which reflect the light beams (9) emitted from the light source (8) onto the photoelement (10, 16).

2. Information carrier changer in accordance with claim 1, characterised in that, the photoelement (16) surrounds the light source (17) in a ring-like manner.

3. Information carrier changer in accordance with claim 1, characterised in that, the light source is formed from light emitting diodes (17) and the photoelement from photocells (16) each as a semiconductor body on the same substrate (15).

4. Information carrier changer in accordance with claim 1, characterised in that, the gripping device (1) is displaceably mounted relative to the stationary magazine (4) for the extraction of the different discs (5).

5. Information carrier changer in accordance with claim 1, characterised in that, a respective storage element (23) is allocated to an information carrier compartment (6) of the magazine (4), in which identification codes of an information carrier (5) are inscribable and are readable for the control of the extraction of this information carrier (5) by the gripping device (1).

6. Information carrier changer in accordance with claim 1, characterised in that, a manually markable character field (26) for the items present on the information carrier (5) is allocated to a respective information carrier compartment (6) and that the character field (26) is scannable by a reading device (27) which controls the gripping device (1) for the reproduction of the marked items.

7. Information carrier changer in accordance with claim 1, characterised in that, the magazine (4) is constituted by individual containers each holding an information carrier (5).

## Revendications

1. Changeur de supports d'informations avec un organe de préhension (1) et un chargeur (4) qui contient les supports d'informations (5) qui sont déplaçables l'un par rapport à l'autre pour enlever différents supports d'informations (5), un dispositif optique (8-19) qui sert au positionnement de l'organe de préhension (1) par rapport au chargeur (4) entre ces deux parties étant prévu dans lequel une source de lumière (8) qui projette un faisceau lumineux (9) sur le côté ouvert du chargeur (4), c'est-à-dire sur les parois et les bords du chargeur tournés vers l'organe de préhension et sur les supports d'informations, et un élément photoélectrique (10, 16) qui détecte la lumière réfléchie par le côté ouvert du chargeur (4) étant prévus, l'élément photoélectrique (10, 16) étant raccordé à un circuit de commande (11) pour le positionnement de l'organe de préhension (1) par rapport au chargeur (4) et pour le prélèvement d'un support d'informations (5), **caractérisé en ce** que les parois et bords (14) du chargeur (4) tournés vers l'organe de préhension (1) sont configurés en ne réfléchissant pas la lumière et les supports d'informations (5) sont des disques compacts qui reflètent le faisceau lumineux (9) qui part de la source de lumière (8) sur l'élément photoélectrique (10, 16).

2. Changeur de supports d'informations selon la revendication 1, **caractérisé en ce** que l'élément photoélectrique (16) entoure la source de lumière (17) en forme d'anneau.

3. Changeur de supports d'informations selon la revendication 1, **caractérisé en ce** que la source de lumière comme diode électroluminescente (17) et l'élément photoélectrique comme cellule photoélectrique (16) sont configurés chacun comme corps semiconducteur sur le même support (15).

4. Changeur de supports d'informations selon la revendication 1, **caractérisé en ce** que l'organe de préhension (1) est positionné en étant mobile par rapport au chargeur fixe (4) pour prélever différents disques (5).

5. Changeur de supports d'informations selon la revendication 1, **caractérisé en ce** qu'un élément de mémoire (23) est affecté respectivement à chaque compartiment de supports d'informations (6) du chargeur (4), élément de mémoire dans lequel des valeurs caractéristiques d'un support d'informations (5) peuvent être enregistrées et peuvent être lues pour la commande pour le prélèvement de ces supports d'informations (5) par l'organe de préhension (1).

6. Changeur de supports d'informations selon la revendication 1, **caractérisé en ce** qu'une case de chiffres (26) qui peut être marquée de manière manuelle est affectée respectivement à chaque compartiment de supports d'informations (6) pour les morceaux qui se trouvent sur le support d'informations (5) et que la case de chiffres (26) peut être balayée par un dispositif de lecture (27) que l'organe de préhension (1) commande pour la reproduction des morceaux marqués.

7. Changeur de supports d'informations selon la revendication 1, **caractérisé en ce** que le chargeur (4) se compose de différents conteneurs qui contiennent un support d'informations (5) chacun.
